Europäisches Patentamt

European Patent Office

Office européen des brevets

(11) Publication number: **0 434 150 A2**

## EUROPEAN PATENT APPLICATION

(21) Application number: 90203338.0

(51) Int. Cl.5: **A23D 7/00**

(22) Date of filing: 14.12.90

(30) Priority: 21.12.89 EP 89203306

(43) Date of publication of application:
26.06.91 Bulletin 91/26

(84) Designated Contracting States:
GB

(71) Applicant: **UNILEVER NV**
**Burgemeester s'Jacobplein 1 P.O. Box 760**
**NL-3000 DK Rotterdam(NL)**

(72) Inventor: **Cain, Frederick William c/o Unilever**
**Research Lab.**
**Olivier van Noortlaan 20**
**NL-3133 AT Vlaardingen(NL)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) Edible fat-containing products.

(57) The present invention is concerned with an edible fat-containing product comprising at least 30 wt.% of a continuous fat phase comprising a mixture of one or more indigestible polyol fatty acid polyesters and optionally triglycerides, and less than 70 wt.% of a dispersed aqueous phase, wherein the mixture of polyol fatty acid polyesters constitutes at least 35 wt.% of the fat phase, said mixture has a slip melting point of at least $30°$ C, and the dispersed aqueous phase has a volume weighted mean diameter of at least 15 microns.

The product according to the present invention offers the advantage that, despite the presence of a substantial amount of high melting polyol fatty acid polyesters, it breaks down in the mouth relatively easily.

# EDIBLE FAT-CONTAINING PRODUCTS

The invention relates to edible fat-containing products comprising indigestible polyol fatty acid polyesters and an aqueous phase. In particular, the invention relates to edible fat-containing products containing a continuous fat phase and a dispersed aqueous phase.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body. Accordingly, it is attractive to replace at least part of the fat in edible fat-containing products by polyol fatty acid polyesters. It is further reported that in food products the use of polyol fatty acid polyesters which are liquid at body temperature, may give rise to the so-called problem of anal leakage.

Edible fat-containing products comprising indigestible polyol fatty acid polyesters are known in the art, and described in eg U.S. Pat. Nos. 3,600,186, 4,005,195, 4,005,196, 4,034,083 and EP Pat. Publ. Nos. 0 233 856, 0 236 288, and 0 235 836.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids.

In this specification by 'indigestible' is meant that at least about 70 % by weight of the material concerned is not digested by the human body.

Edible fat-continuous products such as spreads, have to comply with requirements such as oral response, stability, spreadability, melting behaviour and the like. It is an object of the present invention to provide stable edible fat-containing products comprising a continuous fat phase comprising relatively high melting indigestible polyol fatty acid polyesters, which products do not loose water on spreading and have a good oral response.

We have observed that in formulating spreads, the incorporation of substantial amounts of relatively high melting polyol fatty acid polyesters normally results in negative alterations in product properties. In fat-continuous products, the incorporation of regular levels of high melting polyol fatty acid polyesters was found to yield relatively hard products having a waxy and/or sticky mouthfeel.

We have found now that products comprising a fat continuous phase and a substantial amount of relatively high melting polyol fatty acid polyesters, give a surprisingly good oral response if the dispersed aqueous phase is present in the form of relatively large aqueous phase droplets.

Accordingly the present invention is concerned with an edible fat-containing product comprising at least 30 wt.% of a continuous fat phase comprising a mixture of one or more indigestible polyol fatty acid polyesters and optionally triglycerides, and less than 70 wt.% of a dispersed aqueous phase, wherein the mixture of polyol fatty acid polyesters constitutes at least 35 wt.% of the fat phase, said mixture has a slip melting point of at least 30°C, and the dispersed aqueous phase has a volume weighted mean diameter of at least 15 microns. Here the volume weighted mean diameter is measured by means of NMR, using the method described in J. Colloid and Interface Science 10 (1972), 206 and 93 (1983), 521.

The product according to the present invention offers the advantage that, despite the presence of a substantial amount of high melting polyol fatty acid polyesters, it breaks down in the mouth relatively easily.

2

A rapid break down in the mouth is essential to obtain in-mouth flavour release and to avoid a waxy mouthfeel. Although we do not wish to be bound by theory, it is believed that the relatively large droplet size is mainly responsible for the good oral response observed for the present product.

The presence of a substantial amount of high melting polyol fatty acid polyester can be beneficial for a number of reasons. First of all such spreads tend to be relatively stable at higher temperatures and can therefore suitably be marketed in countries in tropical regions. Secondly the use of high melting polyester allows for the use of triglycerides low in saturated fatty acid residues. Saturated fatty acids in digestible fat are believed to have a negative effect on the blood cholesterol level. Finally the use of higher melting polyol fatty acid polyesters offers the advantage that, unlike low melting polyol fatty acid polyesters, there is only a limited risk of anal leakage.

The advantageous effect of the presence of relatively large water droplets is particularly pronounced in products wherein the mixture of polyol fatty acid polyesters constitutes at least 45 wt.%, more preferably at least 55 wt.% of the fat phase. The products according to present invention normally contain from 35 to 90 wt.% of the fat phase and from 10 to 65 wt.% of the aqueous phase. Thus the invention encompasses products such as margarine and low fat spreads.

As observed above, we believe that a good oral response is obtained when the dispersed aqueous phase has a relatively large volume weighted mean diameter. Preferably the volume weighted mean diameter is at least 20 microns. The aqueous droplets should not become to large as otherwise the product will tend to loose water on spreading and the risk of microbiological spoilage will increase. Generally the volume weighted mean diameter should not exceed 70 microns.

The product according to the present invention differs from polyol fatty acid polyester containing spreads described in the art, in that the volume weighted mean diameter of the aqueous phase is substantially larger. This may be explained from the fact that in earlier applications monoglycerides were incorporated. We have found that polyol fatty acid polyesters normally contain a substantial level of monoglycerides themselves. Thus the incorporation of additional monoglycerides promotes the dispersion of the aqueous phase into the fat phase during the preparation of the product and results in a product containing small aqueous phase droplets. According to a preferred embodiment the present product contains less than 0.1 wt.% monoglycerides. More preferably the present product contains less than 0.1 % monoglycerides by weight of the continuous fat phase.

The benefits of the present invention are particularly appreciated in products wherein the mixture of polyol fatty acid polyesters has a slip melting point in the range of 33° to 48° C. More preferably said mixture has a slip melting point in the range of 35° to 45° C. In order to obtain a product that is easy spreadable at ambient temperature, the present product, besides high melting polyester, should preferably contain relatively low melting triglycerides. Preferably the fat phase of the present product contains from 55 to 80 wt.% polyol fatty acid polyester and from 45 to 20 wt.% triglycerides. According to another preferred embodiment the solids contribution to the $N_{25}$-value by the mixture of polyol fatty acid polyesters is at least 60%, more preferably at least 70%.

The present invention enables the preparation of edible products which, despite the fact that they comprise a relatively high melting continuous fat phase, give a good oral response. Thus, preferably, the fat phase of the present product has an $N_{35}$-value of at least 2, preferably in the range of 3-10.

We have found that the oral response of the present products can be improved by the incorporation of protein. The presence of protein in the dispersed aqueous phase is believed to promote the in-mouth break down of the present product. Preferably the present product contains at least 0.1 wt.% protein. Examples of proteins that can suitably be used in the present product are: gelatin, milk protein, soya protein etc.

According to a very preferred embodiment of the invention the present product is a spread containing from 38-65 wt.% fat. Such low fat spreads, as compared to spreads containing, for instance, 80 wt.% fat, generally produce a better oral response. The latter observation is in contrast with observations made for triglyceride spreads, namely that higher fat levels produce better products.

The $N_t$-value whenever referred to in this application, is measured by the nuclear magnetic relaxation technique and is a direct measure of the level of solid fat content at temperature t. An appropriate procedure is described in Fette, Seifen, Anstrichmittel 80(5), 180-186 (1978). To some extent N-values of fats and fatty substances are dependent on the temperature history in the preparation of the samples for the N-value measurement. For the purposes of the present invention a suitable preparatory temperature history comprises heating the sample to 80° C, followed by 5 minutes at 60° C and 60 minutes at 0° C, whereafter the sample is held for 30 minutes at the temperature of the N-value measurement, subsequent to which said measurement is immediately carried out.

The polyol fatty acid polyesters which may suitably be used in the present invention, have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. Conventional techniques may be used to introduce, if necessary, the required solids profile. Suitable techniques include full or partial hydrogenation, interesterification, transesterification and fractionation, and may be used before or after conversion of the polyols to polyol fatty acid polyesters. Suitable sources of the fatty acid residues are vegetable oils and fats, such as in particular soybean oil, (part of) which is modified to provide the resulting polyol fatty acid polyester with the required solids profile.

It should be understood that in general the polyol fatty acid polyester blend suitable for inclusion in the fat-continuous phase of the present compositions besides high-melting polyesters can also contain low-melting polyesters. It can thus be advantageous to obtain high-melting and low-melting fat fractions (i.e. fractions having high solids and low solids profiles) by fractionating a single fat blend, such as partially hardened soybean oil or a sugar polyester blend comprising both solid and liquid fractions, and combine the high-melting and low-melting fractions in the appropriate ratio in order to arrive at the required N-values of the fat-continuous phase.

As defined hereinbefore polyol fatty acid polyesters may be applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

As indicated hereinbefore in addition to the polyol fatty acid polyester the products of the invention can comprise conventional oils and fats which may be of animal, fish, vegetable or dairy origin. Suitable triglyceride fats and oils include, optionally partially hydrogenated, interesterified or fractionated, coconut oil, palmkernel oil, palm oil, fish oils, lard, tallow fat, butter fat, soybean oil, safflower oil, cotton seed oil, rapeseed oil, poppy seed oil, corn oil, sunflower oil and mixtures thereof.

It has been well recognised that fat-containing products containing relatively large amounts of digestible unsaturated, in particular polyunsaturated fatty acid residues are attractive for their cholesterol-lowering effect. Such products are in particular those in which the fatty acid residues in the digestible part of the fat composition comprise less than 35 % of saturated fatty acid residues. A useful characteristic to scale fat-containing products for their cholesterol-lowering effect is the ratio of unsaturated to saturated fatty acid residues (UFA/SFA). In this context only fatty acid residues in digestible fats are considered. The higher this ratio, the stronger the cholesterol-lowering effect. Since linoleic acid is deemed to be the most effective unsaturated fatty acid as regards its blood cholesterol lowering effect, instead of the above ratio suitably the ratio of linoleic acid to saturated fatty acid residues (LA/SFA ratio) can be used.

Products in which in particular the conventional saturated triglyceride fat fraction is fully or partially replaced by indigestible polyol fatty acid polyesters, allow an appreciable and desirable increment in the UFA/SFA ratio. In the products according to the invention UFA/SFA ratios may be achieved of over 5, such as 6 to 8. If so desired LA/SFA ratios of over 6, or even of more than 8 can be obtained.

The amount of polyunsaturated fatty acid residues, in particular linoleic acid residues, in the digestible part of the fat present in the product according to the invention, is preferably between 30 and 80 %, in particular at least 40 %, or even 60 % by weight of the total amount of digestible fatty acid residues present in the fat phase.

In the products according to the invention conventionally used fat- and water-soluble additives, such as emulsifiers, milk, preservatives, vitamins, in particular vitamins A, D and E, salt and flavour compounds, may be incorporated.

The spread compositions according to the present invention can be prepared by conventional processing. The ingredients are premixed and subsequently processed using conventional heat-exchanging/mixing units to cool, mix and work the spread compositions. Suitable processing devices for these purposes are well-known. Examples thereof are VotatorsTM, crystallizers, resting tubes, pressure valves, static mixers and jet mixers. It is also possible to use cavity transfer mixers as described in WO-A 8 303 222.

The invention is illustrated by means of the following examples.

Example 1

A fat-continuous low fat spread was prepared using the following formulation:

| Ingredient | % by weight |
|---|---|
| Fat phase | 40.0 |
| Beta carotene (0.4% in sunflower oil) | 0.2 |
| Gelatin | 3.0 |
| Skimmed milk powder | 1.0 |
| Salt | 0.4 |
| Potassium sorbate | 0.13 |
| pH to 5.1 with lactic acid | |
| Water | balance |

The fat phase of the spread was composed of the following components:

| Ingredient | % by weight of fat |
|---|---|
| Sunflower oil | 50 |
| Sucrose fatty acid polyester [1] | 50 |

[1] fatty acid residues derived from 55 % fully hardened

soybean oil, slip melting point 65°C, and 45 % touch-hardened soybean oil, slip melting point 28°C; degree of esterification over 95 %

The N-values of the fat phase and the sucrose polyester used were as follows:

| | $N_{10}$ | $N_{20}$ | $N_{30}$ | $N_{35}$ | $N_{40}$ |
|---|---|---|---|---|---|
| Fat phase | 35 | 25 | 13 | 7 | 3 |
| Sucrose polyester | 77 | 68 | 48 | 30 | 14 |

The spread was produced by an inversion process on a microvotator line. The line contained a sequence of apparatus consisting of a scraped surface heat exchanger (A-unit), followed by two jacketed crystallizers (C-units).
The processing conditions applied were as follows:

| | Rotation speed (rpm) | Exit temp. (°C) | Solids Content % |
|---|---|---|---|
| A-unit | 500 | 15 | 9 |
| First C-unit | 1500 | 29 | 6 |
| Second C-unit | 1500 | 27 | 7 |

The product obtained was analysed and evaluated by an expert panel. The following analytical data were obtained:

|  |  |
|---|---|
| $C_5$ * | 1100 g/cm$^2$ |
| $C_{10}$ | 850 g/cm$^2$ |
| $C_{15}$ | 600 g/cm$^2$ |
| $C_{20}$ | 355 g/cm$^2$ |

Conductivity (at 5°C)    0.003 μS/cm

Volume weighted
mean diameter            44.4 microns

* The $C_t$ values represent the hardness of the spread at temperature t. The hardness was measured by means of a cone penetrometer as described in J. Am. Oil. Chem. Soc. <u>36</u> (1959), 345-348.

The spread was found to be stable, easy spreadable and, considering the amount of high melting fat present in the fat phase, was found to break down in the mouth relatively easily.

Comparative Example A

Example 1 was repeated with the exception that 0.2 wt.% water was replaced by 0.2 wt.% monoglycerides (Hymono 8903 TM). The optimal processing conditions for this formulation were found to be slightly different from those recited in Example 1. The processing conditions employed were as follows:

|  | Rotation speed (rpm) | Exit temp. (°C) | Solids Content % |
|---|---|---|---|
| A-unit | 500 | 19 | 3 |
| First C-unit | 1500 | 31 | 6 |
| Second C-unit | 1500 | 29 | 7 |

The following analytical data were obtained for this product:

|  |  |
|---|---|
| $C_5$ | 1500 g/cm$^2$ |
| $C_{10}$ | 1190 g/cm$^2$ |
| $C_{15}$ | 890 g/cm$^2$ |
| $C_{20}$ | 690 g/cm$^2$ |

Conductivity (at 5°C)    0.006 μS/cm

Volume weighted
mean diameter            8.8 microns

The product was found to be very brittle and crumbly. Also the product displayed a poor break down in the mouth.

**Claims**

1. Edible fat-containing product comprising at least 30 wt.% of a continuous fat phase comprising a mixture of one or more indigestible polyol fatty acid polyesters and optionally triglycerides, and less than 70 wt.% of a dispersed aqueous phase, wherein the mixture of polyol fatty acid polyesters constitutes at least 35 wt.% of the fat phase, said mixture has a slip melting point of at least 30°C, and the dispersed aqueous phase has a volume weighted mean diameter of at least 15 microns.

2. Product according to claim 1, wherein the mixture of polyol fatty acid polyesters constitutes at least 45 wt.%, preferably at least 55 wt.% of the fat phase.

3. Product according to claim 1 or 2 wherein the product contains from 35 to 90 wt.% of the fat phase and from 10 to 65 wt.% of the aqueous phase.

4. Product according to any one of claims 1-3, wherein the dispersed aqueous phase has a volume weighted mean diameter of at least 20 microns.

5. Product according to any one of claims 1-4, wherein the fat phase contains less than 0.1 wt.% monoglycerides.

6. Product according to any one of claims 1-5, wherein the mixture of polyol fatty acid polyesters has a slip melting point in the range of $33°$ to $48°$ C.

7. Product according to any one of claims 1-6, wherein the solids contribution to the $N_{25}$-value by the mixture of polyol fatty acid polyesters is at least 60%.

8. Product according to any one of claims 1-7, wherein the fat phase has an $N_{35}$-value of at least 2, preferably in the range of 3-10.

9. Product according to any one of claims 1-8, wherein the dispersed aqueous phase contains at least 0.1 wt.% protein.

10. Product according to any one of claims 1-9, wherein the product is a spread containing from 38-65 wt.% fat.

7